# EUROPEAN PATENT SPECIFICATION

(11) **EP 3 119 249 B1**
(45) Date of publication and mention of the grant of the patent: **15.05.2019**
(21) Application number: 15710886.1
(22) Date of filing: 30.01.2015
(51) Int. Cl.: A47J 36/02, A47J 27/00

(54) **VESSEL FOR FOOD COOKING AND METHOD FOR ITS OBTAINMENT**
BEHÄLTER ZUM KOCHEN VON LEBENSMITTELN UND VERFAHREN ZU DESSEN HERSTELLUNG
RÉCIPIENT DE CUISSON D'ALIMENT ET PROCÉDÉ POUR L'OBTENIR

(30) Priority: 31.01.2014 IT VR20140026
(43) Date of publication of application: 25.01.2017
(73) Proprietor: TVS S.p.A., 61033 Fermignano (PS) (IT)
(72) Inventor: BERTOZZINI, Giuseppe Alberto, I-61029 Urbino (Pesaro Urbino) (IT)
(74) Representative: Feltrinelli, Secondo Andrea
(86) International application number: PCT/IB2015/050716
(87) International publication number: WO 2015/114581

(56) References cited:
- GB-A- 505 955
- KR-A- 20110 011 902
- US-A- 5 694 674

## Description

### TECHNICAL FIELD OF THE INVENTION

The present invention relates to a container for cooking foods.

More in particular, the present invention relates to a container for cooking foods especially suitable for cooking on electromagnetic induction sources.

In addition, the present invention relates to a method for obtaining the aforesaid container for cooking foods.

### STATE OF THE PRIOR ART

In the field of containers for cooking food, such as pots, pans, frying pans, and the like, types of containers are known that are particularly, but not exclusively, suitable for the cooking on modern electromagnetic induction plates.

A container belonging to such types normally comprises a bottom made of a first material, for example a ferromagnetic material or other material with similar properties. Moreover, such container comprises a bowl made of a second material, for example a non-ferromagnetic material, fixed to the aforesaid bottom.

The coupling of such components - which can be obtained with different technologies - allows obtaining a good technical result in the use of the container with heat sources of induction type, since the bottom made of the first material is heated by the eddy currents that are generated due to the magnetic field generated by the induction source, and it transfers the heat to the bowl. The latter then distributes the heat to the food in a gradual and uniform manner.

The main technical problem concerning the containers of this type is caused by the difference between the thermal expansion coefficients of the first and second material, which in use may cause substantial deformation of the container; in the worst cases, partial or full detachment of the bottom of the bowl may occur.

To overcome this drawback, different solutions have been developed, one of which is described, for example, in patent n° EP 0 604 617.

This document describes a container for cooking foods comprising a bowl of metal material - for example stainless steel - connected to a bottom made of two layers. The first, innermost, layer of the bottom is made of aluminium alloy, suitable to achieve adequate diffusion of the heat, while the second, outermost, layer is made of ferromagnetic material, for example stainless steel, and is intended to be positioned in the immediate vicinity of the induction source in order to be heated and transfer the heat to the entire container.

In order to limit the above mentioned problems due to the difference between the expansion coefficients of the two materials that make up the bottom, the second layer of ferromagnetic material is realized with a series of openings and/or notches, so that between the solid areas and the empty areas of the second layer there is a certain suitably determined proportion.

This solution was then applied also to containers in which the entire bowl is made of aluminium alloy, so as to obtain a better uniformity of cooking of foods. The bottom of the bowl is therefore fixed directly to the layer of ferromagnetic material provided with openings and/or notches.

This type of container is more prevalent today among those suitable for cooking on electromagnetic induction plates since, as mentioned, the bowl made of aluminium alloy ensures optimal diffusion of the heat. Furthermore, the use of aluminium alloy to obtain the bowl greatly limits the overall weight of the object. Further examples of vessels for induction cooking are given in the documents US 5 694 674 and GB 505 955.

In practical use, however, it is observed that this type of container does not provide completely satisfactory results from the point of view of stability at normal cooking temperatures.

In fact, in use, non negligible deformations of the bottom of the container are still found, mainly in relation to the fact that the upper layers of the thickness of the bottom, however, tend to expand more than the lower layers, which are limited in their movements by the presence of the layer of ferromagnetic material, although perforated and/or carved.

These deformations determine for example the raising of the central part of the bottom of the container with consequent displacement of the contents - for example oil or batter - towards the periphery of the bottom of the container, making the effect of cooking inhomogeneous.

These deformations, if excessive, may also lead, as stated, to the partial or complete detachment of the bottom of the bowl during use of the container.

### OBJECTS OF THE INVENTION

The technical task of the present invention is to improve the state of the art.

Within the scope of such technical task, an object of the present invention is to obtain a container for cooking foods, of the type suitable for cooking on electromagnetic induction plates, which has a more stable behaviour at the cooking temperatures with respect to the containers of known type, that is having lower deformations in use. Such task and such objects are attained by a container for cooking foods according to the enclosed claim 1.

The container according to the invention, of the type that can be used on electromagnetic induction sources, comprises a first substantially concave element, made of a first material and comprising an upper surface intended to receive the foods to be cooked, and a lower surface for the support of the container, a second element, fixed to the lower surface of the first element and at least partially included in the thickness of the same first element.

The second element is made of a second material suitable to be heated when immersed in the magnetic field generated by an induction source, and is furthermore affected by a plurality of lower through openings and/or notches.

The container according to the invention also comprises a third element, fixed to the upper surface of the first element and at least partially included in the thickness of the same first element.

The third element is made of the aforesaid second material or of a third material suitable for contact with foods.

The third element is furthermore affected by a plurality of upper through openings and/or notches.

The dependent claims refer to preferred and advantageous embodiments of the invention.

### BRIEF DESCRIPTION OF THE DRAWINGS

Further characteristics and advantages of the present invention will be clearer from the detailed description of the invention, illustrated as an exemplifying and non-limiting example, in the enclosed drawings in which:
figure 1 is a detail of a section of the container according to the invention;
figure 2 is a plan view of the second element or of the third element of the container according to the invention;
figure 3 is a cross-section of the second element, or of the third element, taken according to the plane III-III of figure 2;
figure 4 is a cross-section of a detail of the container in a step of the method for the obtainment thereof;
figure 5 is a plan view of the container in a step of the method for the obtainment thereof;
figure 6 is a detail of a section of the container according to another embodiment of the invention;
figure 7 is a detail of a section of the container according to yet another embodiment of the invention;
figure 8 is a cross-section of a detail of the container in a step of the method for the obtainment thereof.

### EMBODIMENTS OF THE INVENTION

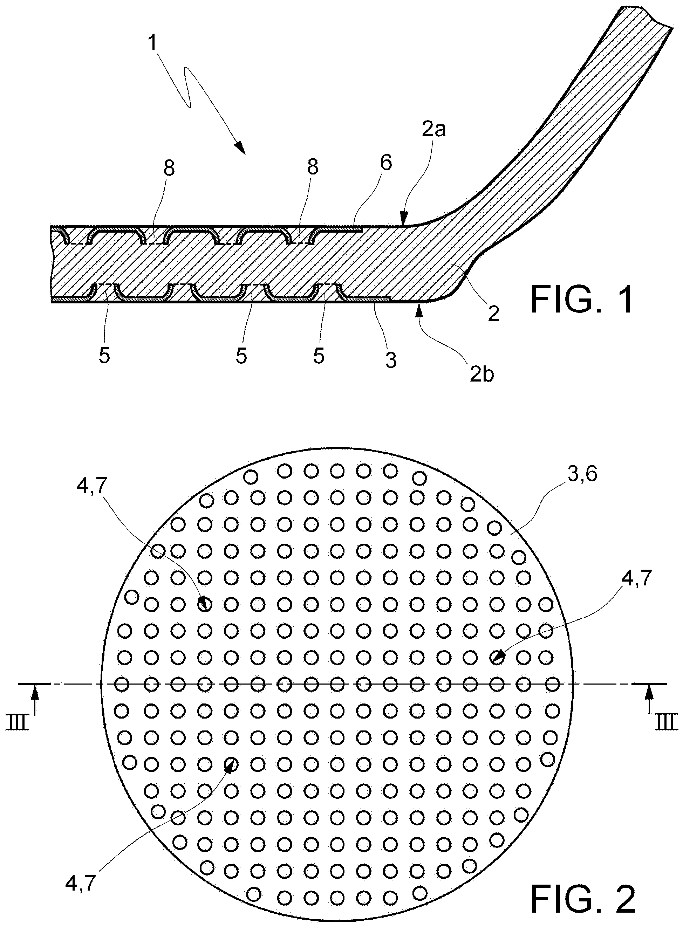

With particular reference to figure 1, a container for cooking foods according to the invention is wholly indicated with number 1.

The container 1 according to the invention is of the type that can be used on electromagnetic induction sources.

The container 1, however, can also be employed on any other heat source, without any limitation.

The container 1 can be for example a pan, a pot, a frying pan, a saucepan, or any other container suitable for cooking foods, of any shape and/or size.

The size and proportions of the container 1 illustrated in figure 1 are strictly an indication, for the sole purpose of illustrating the characteristics of the invention.

The container 1 comprises a first element 2.

The first element 2 is substantially concave: in other words, the first element 2 is substantially shaped as a bowl for containing the foods to be cooked.

The first element 2 comprises an upper surface 2a, intended to receive the foods to be cooked.

The upper surface 2a of the first element 2 normally comprises a substantially flat portion, forming the bottom of the container 1, and a side surface defining the walls of the container 1 itself.

Obviously, the side surface of the first element 2 can have any shape and size, in relation to the type of container 1 to be obtained.

The first element 2 further comprises a lower surface 2b for the support of the container 1.

The first element 2 is made of a first material.

The first material of which the first element 2 is made, is of the type that is not appreciably heated if placed in the vicinity of an electromagnetic induction source. More in detail, the first material of the first element 2 is of the non-ferromagnetic type. In a preferred embodiment of the invention, the first material of which the first element 2 is made, consists of aluminium, or of an aluminium alloy, or of another metal material, or metal alloy, characterized by high heat conductivity and good machinability.

The container 1 further comprises a second element 3.

The second element 3 is fixed to the lower surface 2b of the first element 2.

More in particular, the second element 3 is permanently fixed to the lower surface 2b of the first element 2, being separable therefrom only with a mechanical action.

The second element 3 is fixed to the lower surface 2b so as to be at least partially included in the thickness of the first element 2.

In a preferred embodiment of the invention, the second element 3 is completely included in the thickness of the first element 2, as will be better explained hereinafter. In this manner, the lower surface 2b of the first element 2 and the second element 3 define a smooth surface, that is lacking significant discontinuities, for the support of the container 1.

The second element 3 is made of a second material.

The second material with which the second element 3 is made is of the type suitable to be heated when immersed in the magnetic field generated by an induction source. More in detail, the second material is of the ferromagnetic type.

In a preferred embodiment of the invention, the second material consists of stainless steel.

For example, AISI 430 steel can be employed, or alternatively AISI 304 steel.

More in general, materials of the ferromagnetic type can be employed having certain requirements such as high corrosion resistance, and other known requirements.

The second element 3 may be of any shape, in relation to the specific container 1 to be obtained.

In the embodiment depicted in the figures, the second element 3 has a circular shape, since the container 1 to be obtained consists, for example, of a pan, a pot, a frying pan, a saucepan or the like, of circular shape.

In other embodiments the second element 3 can be for example of oval, rectangular, square shape, etc., without any limitation.

The second element 3 is furthermore affected by a plurality of lower through openings and/or notches 4.

The lower through openings and/or notches 4 of the second element 3 have the function of allowing the anchoring of the second element 3 to the first element 2.

In the embodiment of the invention illustrated in figures 1-3, the lower openings 4 are circular or substantially circular-shaped, see for example figure 2.

The lower openings 4 are distributed in a substantially uniform manner on the surface of the second element 3.

The lower openings 4 could be distributed on the surface of the second element 3 also in a different manner, for example in a non-uniform manner.

In one embodiment of the invention, the lower openings 4 could be distributed on the surface of the second element 3 so as to be more clustered in some areas than in others. More in general, the lower openings 4 and/or the lower notches provided for in the second element 3 can be of any shape and/or size without any limitation, in relation to specific applications needs.

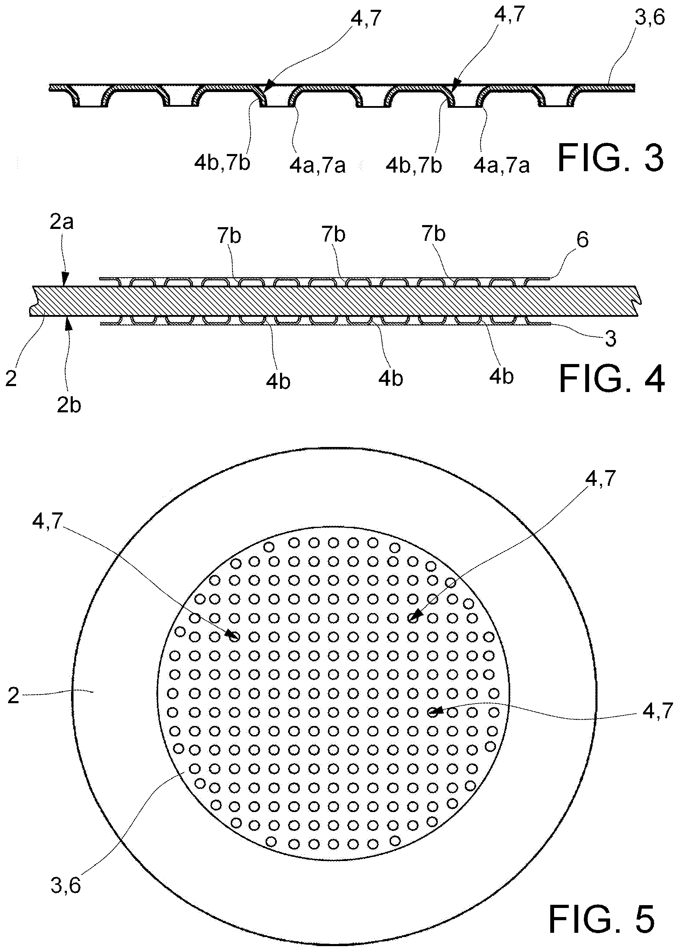

As illustrated in figure 3, the lower openings 4 of the second element 3 define respective folded lower edges 4a penetrating through the thickness of the first element 2.

This solution allows a permanent connection to be obtained, between the two parts, that is safe and reliable.

More in detail, the lower edges 4a of the lower openings 4 define converging lower tubular portions 4b.

As illustrated in figure 1, the converging lower tubular portions 4b are adapted to obtain, upon assembly of the second element 3 with the first element 2, undercuts that prevent the detachment of the second element 3 from the first element 2.

In other words - as will be better explained hereinafter - the material of the first element 2 penetrates inside the converging lower tubular portions 4b of the second element 3, so as to define respective lower conical portions 5 that permanently retain the second element 3 itself on the first element 2.

As stated, in the container 1, the lower tubular portions 4b of the second element 3 obtain undercuts with which the lower conical portions 5 are associated. Such undercuts ensure a stable mechanical constraint between the first element 2 and the second element 3, preventing their mutual separation and hence detachment.

The second element 3 can be of any thickness, without any limitation, in relation to the specific application needs.

According to the present invention, the container 1 comprises a third element 6.

The third element 6 is fixed to the upper surface 2a of the first element 2.

More in particular, the third element 6 is permanently fixed to the upper surface 2a of the first element 2, except for voluntary separation operations.

The third element 6 is fixed to the upper surface 2a so as to be at least partially included in the thickness of the first element 2.

In a preferred embodiment of the invention, the third element 6 is completely included in the thickness of the first element 2, as will be better explained hereinafter.

In this manner, the upper surface 2a of the first element 2 and the third element 6 define a smooth cooking surface, that is lacking substantial discontinuities, inside the container 1.

The third element 6 is made of a third material, or of the same second material of which the second element 3 is made.

In the case in which the third element 6 is made of a third material different from the aforesaid second material, it is noted that such third material is of the type suitable for contact with foods.

More in detail, such third material can be of the ferromagnetic type, and in particular it can be a stainless steel, for example the same stainless steel constituting the aforesaid second material, or a stainless steel of different type.

It is, however a material suitable for use in the food sector, that is having certain requirements such as high corrosion resistance, and other known requirements. According to the invention, the third element 6 is affected by a plurality of through upper openings and/or notches 7.

Due to this solution, therefore, as compared to the containers of known type, the effect of compensation of the different thermal expansions of the different materials is greatly increased.

In particular, with respect to the containers of known type, the bottom of the container 1 is made much more stable and free from deformations since, at the temperatures of use, it exhibits the same behaviour both at the lower layers and at the upper layers of the thickness of the first element 2.

In other words, the first element 2 results trapped between the second element 3 and the third element 6, which have the same behaviour at the temperatures of use; therefore, the possible deformations of the first element 2 are greatly limited. Moreover, in the case in which the third element 6 is made of stainless steel, the inner surface of the container 1 is more resistant to scratches and abrasions.

The great limitation of the deformations of the bottom of the container 1 eliminates the undesired effect of displacement of cooking liquids - oil, fats - towards the periphery of the container 1, leaving the centre free from liquids: the cooking of foods is thus more homogeneous, and of better quality.

The third element 6 can be of any shape, in relation to the specific container 1 to be obtained.

In the embodiment represented in the figures, the third element 6 is of circular shape, since the container 1 to be obtained consists, for example, of pan, a pot, a frying pan, a saucepan, or the like, of circular shape.

In other embodiments the third element 6 can be, for example, of oval, rectangular, square shape, etc., without any limitation.

In a preferred embodiment of the invention, the upper openings 7 of the third element 6 are of circular or substantially circular shape.

The upper openings 7 are distributed in a substantially uniform manner on the surface of the third element 6.

In other embodiments, the upper openings 7 could be distributed on the surface of the third element 6 also in a different manner, for example a non-uniform manner.

In a particular embodiment of the invention, the upper openings 7 could be distributed on the surface of the third element 6 so as to be more clustered in some areas than in others.

More in general, the upper openings 7 and/or the upper notches provided for in the third element 6 can be of any shape and/or size without any limitation, in relation to specific applications needs

The upper openings 7 of the third element 6 define respective folded upper edges 7a penetrating through the thickness of the first element 2.

This solution allows a permanent connection to be obtained, between the two parts, that is safe and reliable.

More in detail, the upper edges 7a of the upper openings 7 define respective converging upper tubular portions 7b.

As illustrated in figure 1, the converging upper tubular portions 7b are adapted to obtain, upon assembly of the third element 6 with the first element 2, undercuts that prevent the detachment of the third element 6 from the first element 2.

In other words - as will be better explained hereinafter - the material of the first element 2 penetrates inside the converging upper tubular portions 7b of the third element 6, so as to define respective upper conical portions 8 that permanently block the third element itself 6.

As stated, in the container 1, the upper tubular portions 7b of the third element 6 obtain undercuts with which the upper conical portions 8 are associated. Such undercuts ensure a stable mechanical constraint between the first element 2 and the third element 6, preventing their mutual separation and hence detachment.

The third element 6 can be of any thickness, without any limitation, in relation to the specific application needs.

In some embodiments of the invention, the third element 6 can be made completely identical to the second element 3 with regard to shape and size. Moreover the two elements 3,6 can also be made of the same material.

In the embodiment of the invention specifically represented in the figures 1-3, which is of particular practical interest, the third element 6 can be made of the same shape as the second element 3, but with different size, in particular smaller, than the second element 3.

In particular, the third element 6 has the same shape as the second element 3 but it has a smaller diameter, to allow attaining the proper radius of curvature of the first element 2 and to thereby obtain the container 1 of the desired shape.

The adoption of the same shape for the second element 3 and the third element 6 allows maximizing the stabilization effect of the behaviour of the bottom of the container 1 at the temperatures of use.

In other embodiments of the invention not represented in the figures, the second element 3 and the third element 6 could have entirely different shape and size.

For example, the number and/or the size of the upper openings 7 of the third element 6 could be smaller than those of the lower openings 4 of the second element 3, so as to facilitate the obtainment of a smooth surface, that is lacking discontinuities, at the upper surface 2a of the first element 2, that is the surface intended to receive the foods to be cooked.

It is noted that the container 1 can be provided with any further element or accessory, such as a permanent handle, that can be fixed with means and techniques known in the field, or for example also a removable handle or knob.

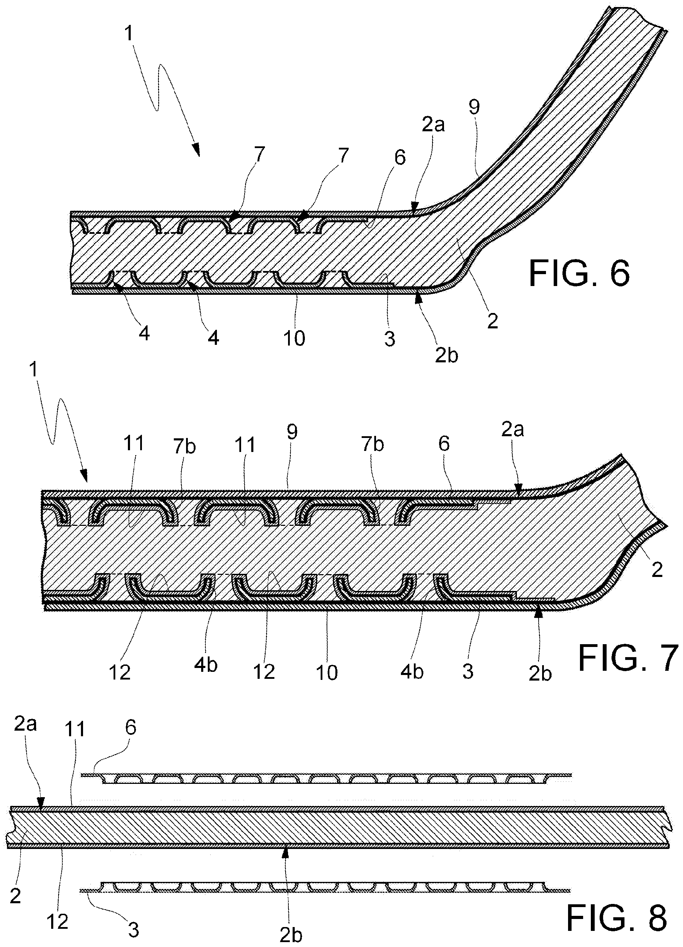

Figure 6 illustrates, in a detailed section, another embodiment of the present invention. In this embodiment, the container 1 comprises all the characteristics of the embodiment previously described and represented in the figures 1-5.

Moreover, in this embodiment, the container 1 comprises a first upper layer 9 of protective and/or anti-stick material.

The protective and/or anti-stick material can be any material of known type in the field of the production of containers for cooking foods.

The first upper layer 9 is applied on the upper surface 2a of the first element 2 and on the third element 6.

The technology for applying the first upper layer 9 can be any known technology in the field of the production of containers for cooking foods.

Moreover, the container 1 comprises a first lower layer 10 of protective and/or anti-stick material.

The material with which the first lower layer 10 is made can be the same material with which the first upper layer 9 is made, or another material of known type in the field of the production of containers for cooking foods.

Also the technology for applying the first lower layer 10 can be any known technology in the field of the production of containers for cooking foods.

The first lower layer 10 is applied on the lower surface 2b of the first element 2 and on the second element 3.

The first lower layer 10 and the first upper layer 9 of protective and/or anti-stick material allow obtaining a container 1 more respondent to market needs with regard in particular to the appearance of the product and the performances of the product during use, as well as with regard to the integrity of its characteristics over time.

In the figures 7,8 another embodiment of the invention is illustrated.

In this embodiment of the invention, the container 1 comprises all the characteristics of the embodiment previously described and represented in figure 6.

Moreover, in this embodiment, the container 1 comprises a second upper layer 11 of anticorrosion coating material.

The second upper layer 11 is interposed between the first element 2 and the third element 6.

More in particular, as illustrated in figure 7, the second upper layer 11 is interposed between the first element 2 and the third element 6 on the entire surface of mutual contact between the two elements, or at least on most of it.

The function of the second upper layer 11 is that of preventing galvanic corrosion phenomena from taking place at the surfaces of mutual contact between the first element 2 and the third element 3 which are made of different materials, for example of different metallic materials such as aluminium alloy and stainless steel.

Moreover, in this embodiment the container 1 comprises a second lower layer 12 of anticorrosion coating material.

The second lower layer 12 is interposed between the first element 2 and the second element 3.

More in particular, the second lower layer 12 is interposed between the first element 2 and the second element 6 on the entire surface of mutual contact between the two elements, or at least on most of it.

The function of the second lower layer 12 is the same as the second upper layer 11, that is that of preventing galvanic corrosion phenomena from taking place at the surfaces of mutual contact between the first element 2 and the second element 3.

The anticorrosion coating material used for obtaining the second upper layer 11 can be any material suitable for food use.

Object of the present invention is also the method for obtaining a container for cooking foods, particularly but not exclusively the container 1 represented in the figures 1-3.

In addition to the already mentioned figures 1-3, for a better understanding of the method reference is also made to figures 4,5.

The method comprises a step of providing the first element 2.

The first element 2 is made of the aforesaid first material.

The first element 2 is provided flat, with suitable geometry for obtaining the desired final shape of the container 1.

For example, in the illustrated embodiment, the first element 2 is provided with a flat discoid shape to obtain, at the end of the method, a container 1 of circular shape, such as a pan, a pot, a frying pan or the like.

The first element 2 comprises, as stated, an upper surface 2a intended to receive the foods to be cooked, and a lower surface 2b for the support of the container 1.

The method then provides for a step of providing a second element 3.

The second element 3 is made of the aforesaid second material.

Also the second element 3 is provided flat, and more in detail it is provided with discoid flat geometry, as illustrated in figure 2.

The second element 3 is affected by a plurality of lower through openings and/or notches 4; more in detail, the second element 3 comprises lower openings 4 of circular shape, and distributed in a uniform manner on the surface thereof.

The lower openings 4 comprise respective lower edges 4a defining converging lower tubular portions 4b, as illustrated in figure 3.

The method further comprises a step of providing a third element 6.

The third element 6 can be made of the aforesaid second material, or of a third material with similar properties, as described above.

Also the third element 6 is provided flat, and more in detail it is provided with flat discoid geometry, as illustrated in figure 2.

The third element 6 is affected by a plurality of through upper openings and/or notches 7; more in detail, the third element 6 comprises upper openings 7 of circular shape, and distributed in a uniform manner on the surface thereof.

The upper openings 7 comprise respective upper edges 7a defining converging upper tubular portions 7b, as illustrated in figure 3.

The method subsequently comprises a step of fixing the second element 3 to the lower surface 2b of the first element 2.

In particular, fixing of the second element 3 to the lower surface 2b of the first element 2 is carried out in a permanent manner so as to include the second element 3 itself in the thickness of the first element 2, as will be better described hereinafter.

The method also comprises a step of fixing the third element 6 to the upper surface 2a of the first element 2.

In particular, fixing of the third element 6 to the upper surface 2a of the first element 2 is carried out in a permanent manner so as to include the third element 6 itself in the thickness of the first element 2, as will be better described hereinafter.

The method further comprises a step of deforming the first element 2 to obtain the final shape of the container 1.

In particular, this step confers the second element 2, initially flat, the concavity required to obtain the container 1 of the desired type.

The second element 3 and the third element 6 are obtained, for example, by sheet cutting, or other equivalent technology.

In more detail, according to the present invention the aforesaid steps of fixing the second element 3 to the lower surface 2b of the first element 2, and of fixing the third element 6 to the upper surface 2a of the first element 2 are obtained through a first and second cold moulding stage, carried out at different powers.

The aforesaid first cold moulding stage is, in particular, suitable to constrain the second element 3 to the lower surface 2b of the first element 2, and the third element 6 to the upper surface 2a of the same first element 2.

In practice, in such first stage, schematically illustrated in figure 4, the lower tubular portions 4b of the second element 3, and the upper tubular portions 7b of the second element 6 partially penetrate through the lower surface 2b and the upper surface 2a, respectively, of the second element, so as to obtain a permanent connection between the three elements 2,3,6.

The constraining of the second element 3 and the third element 6 to the first element 2, as described above, can be carried out in two respective different processes, that is one for fixing the second element 3 and one for fixing the third element 6, or simultaneously, i.e. in the same process, with obvious savings.

This first cold moulding stage can be carried out, for example, on a hydraulic press operating at a firs power value.

The aforesaid second cold moulding stage is suitable to include, at least partially, the second element 3 and the third element 6 in the thickness of said first element 2. More in particular, the aforesaid second moulding stage is suitable to include the second element 3 and the third element 6 completely in the thickness of the first element 2.

In practice, in such second stage, the lower tubular portions 4b of the second element 3, and the upper tubular portions 7b of the second element 6 completely penetrate through the lower surface 2b and the upper surface 2a, respectively, of the second element.

In this manner, the permanent connection between the three elements 2,3,6 is completed so that the lower surface 2b, with the second element 3 included, and the upper surface 2a, with the third element 6 included, are substantially smooth, that is lacking discontinuities.

This allows obtaining an optimum result both functionally and a esthetically.

Complete inclusion of the second element 3 and of the third element 6 into the first element 2, as described above, can be carried out in two respective different processes, that is one for the inclusion of the second element 3 and one for the inclusion of the third element 6, or simultaneously, that is in the same process, with obvious savings. This second cold moulding stage can be carried out, for example, on the same hydraulic press as the first stage, or on another press, operating at a second value of power higher than the aforesaid first value.

The step of deformation of the first element 2, required to obtain a container of the desired shape, can be carried out for example by cold moulding on the same hydraulic press, or on another press, or by means of another equivalent technology.

In an embodiment of the method according to the invention, the aforesaid second moulding stage is carried out simultaneously with the deformation step of the first element 2.

In still another embodiment of the method according to the invention, the aforesaid two moulding stages and the aforesaid deformation step of the first element 2 are carried out simultaneously in a single operation.

An embodiment of the method according to the present invention comprises all the operative steps previously described, and also comprises a step of applying on the upper surface 2a of the first element 2 a first upper layer 9 of protective and/or anti-stick material.

Moreover, in the same embodiment, or also in another embodiment, the method comprises a step of applying on the lower surface 2b of the second element 2 a second lower layer 10 of protective and/or anti-stick material.

The application of the first upper layer 9 and/or of the first lower layer 10 of protective and/or anti-stick material can be carried out with different technologies and in different operative steps.

For example, the first upper layer 9 and/or the first lower layer 10 can be applied by means of painting techniques of roller, or spray type, or still others.

In an embodiment of the method of particular practical interest, the first lower layer 10 can be applied on the lower surface 2b of the first element 2, when this is still flat and also includes the second element 3, by means of a roller painting technique, which is cheaper than other techniques.

The first upper layer 9 instead can be applied on the upper surface 2a, after the step of deformation of the first element 2 to obtain the final shape of the container 1, by means of a spray painting technique, that allows obtaining optimum quality results on curved surfaces.

In an alternative embodiment of the method, both the first upper layer 9 and the first lower layer 10 can be respectively applied on the upper surface 2a - incorporating the third element 6 - and on the lower surface 2b - incorporating the second element 3 - of the first element 2 by means of a roller painting technique before the step of deformation of the first element 2, that is when such first element 2 still has a flat geometry; this solution is therefore particularly cheap from the from the point of view of production costs.

Another embodiment of the method according to the present invention comprises all the operative steps previously described, and further comprises a step of applying, on the upper surface 2a of the first element 2, a second upper layer 11 of anticorrosion coating material, interposed between the first element 2 and the third element 6.

In particular, such step is carried out before realizing the fixing of the third element 6 on the upper surface 2a of the first element 2, as shown in figure 8.

More in detail, as illustrated in figure 7, at the end of the method, the second upper layer 11 is interposed between the first element 2 and the third element 6 on the entire surface of mutual contact between the two elements, or at least on most of it, in order to avoid galvanic corrosion phenomena, as explained above.

In practice, once the second upper layer 11 has been applied on the upper surface 2a of the first element 2 when this still has a flat geometry, the subsequent pressure exerted on the third element 6 to determine the inclusion thereof in the thickness of the first element 2 determines the adhesion of the second upper layer 11 on all the surfaces of mutual contact between the first element 2 and the third element 6.

In this manner a barrier against the passage of electric charges is created, in particular electrons, from the nobler metal to the less noble metal, and the occurrence of the phenomenon of galvanic corrosion along the contact surfaces is prevented, or at least greatly limited.

The method further comprises, in this same embodiment or in another distinct embodiment, a step of applying, on the lower surface 2b of the first element 2, a second lower layer 12 of anticorrosion coating material, interposed between the first element 2 and the second element 3.

In particular, such step is carried out before realizing the fixing of the second element 3 on the lower surface 2b of the first element 2, as shown in figure 8.

More in detail, as illustrated in figure 7, at the end of the method the second lower layer 12 is interposed between the first element 2 and the second element 3 on the entire surface of mutual contact between the two elements, or at least on most of it, in order to avoid galvanic corrosion phenomena, as explained above.

In practice, once the second lower layer 12 has been applied on the lower surface 2b of the first element 2 when this still has a flat geometry, the subsequent pressure exerted on the second element 3 to determine the inclusion thereof in the thickness of the first element 2 determines the adhesion of the second lower layer 12 on all the surfaces of mutual contact between the first element 2 and the second element 3, so as to create a barrier against the passage of electric charges between the two metals in mutual contact.

The various embodiments of the method according to the invention have multiple advantages.

First, the connection between the first element 2, the second element 3 and the third element 6 occurs by means of cold moulding, without the need to previously heat the parts to be connected.

Moreover, the connection between the elements 2,3,6 is particularly safe and reliable against risks of accidental detachment during use, due to the undercuts obtained in the thickness of the first element 2.

Still, no welding operations of the parts to be connected are carried out in any step of the method.

The production method is then particularly fast and cheap.

In fact it does not require the use of specific plants different than those used for obtaining containers of aluminium only with high thickness differentiation (high-power presses).

Moreover, no "gluing" materials are used between the different elements such as for example in brazing.

It has thus been seen how the invention fully attains the proposed objects.

The present invention thus conceived is susceptible of numerous modifications and variants all within the protective scope of the following claims.

## Claims

1. Container for cooking foods, of the type that can be used on electromagnetic induction sources, comprising a first substantially concave element (2), made of a first material and comprising an upper surface (2a) intended to receive the foods to be cooked, and a lower surface (2b) for the support of the container,
a second element (3) fixed to said lower surface (2b) and at least partially included in the thickness of said first element (2),
said second element (3) being made of a second material suitable to be heated when immersed in the magnetic field generated by an induction source,
furthermore said second element (3) being affected by a plurality of lower through openings and/or notches (4), and
a third element (6) fixed to said upper surface (2a) and at least partially included in the thickness of said first element (2),
said third element (6) being made of said second material or a third material,
said third element (6) having a plurality of upper through openings and/or notches (7) said container being **characterised in that** said second element (3) and said third element (6) have the respective lower (4) and upper (7) openings and/or notches defining respective folded lower edges (4a) and upper edges (7a) penetrating through the thickness of said first element (2), wherein said lower (4a) and upper (7a) edges define respective converging lower tubular portions (4b) and upper tubular portions (7b) adapted to obtain, penetrating through the thickness of said first element (2), undercuts which prevent the detachment of said second element (3) and third element (6) from said first element (2).

2. Container according to claim 1, wherein said first material is of the non-ferromagnetic type.

3. Container according to the preceding claim, wherein said first material consists of aluminium, or of an aluminium alloy, or of another metal material, or metal alloy, **characterized by** high heat conductivity and good machinability.

4. Container according to claim 1, wherein said second material and/or said third material are of the ferromagnetic type.

5. Container according to claim 1, wherein said second material and/or said third material consists of stainless steel.

6. Container according to claim 1, wherein said upper (7) and/or lower (4) openings are substantially circular-shaped and they are distributed in a substantially uniform manner on the surface of said third element (6) and/or second element (3).

7. Container according to one of the preceding claims, comprising a first upper layer (9) and/or a first lower layer (10) of protective and/or anti-stick coating material, respectively applied on said upper surface (2a) of said first element (2) incorporating said third element (6), and/or on said lower surface (2b) of said first element (2) incorporating said second element (3).

8. Container according to the preceding claim, comprising a second upper layer (11) and/or a second lower layer (12) made of anticorrosion coating material, interposed between said first element (2) and said second element (3) and/or said third element (6).

9. Method for obtaining a container for cooking foods, of the type that can be used on electromagnetic induction sources, comprising the steps of:
providing a first element (2) made of a first material, comprising an upper surface (2a) intended to receive the foods to be cooked, and a lower surface (2b) for the support of the container (1),
providing a second element (3), made of a second material suitable to be heated when immersed in the magnetic field generated by an induction source, and affected by a plurality of lower through openings and/or notches (4),
providing a third element (6), made of said second material or of a third material and having a plurality of upper through openings and/or notches (7),
fixing said second element (3) to said lower surface (2b), so as to include it at least partially in the thickness of said first element (2),
fixing said third element (6) to said upper surface (2a), so as to include it at least partially in the thickness of said first element (2), and
deforming said second element (2) to confer it the final shape of the container (1), said method being **characterised in that** said lower (4) and upper (7) openings and/or notches comprise respective lower (4a) and upper (7a) edges which define converging tubular portions, adapted to obtain, with the inclusion in the thickness of said first element (2), undercuts which prevent the detachment of said second element (3) and third element (6) from said first element (2) and **in that** said steps of fixing said second element (3) to said lower surface (2b), and fixing said third element (6) to said upper surface (2a) are obtained through a first and a second cold moulding stage, carried out at different powers.

10. Method according to the preceding claim, wherein said first cold moulding stage is suitable to constrain said second element (3) to said lower surface (2b), and said third element (6) to said upper surface (2a).

11. Method according to the preceding claim, wherein said second cold moulding stage is suitable to include said second element (3) and said third element (6) in the thickness of said first element (2).

12. Method according to one of claims 9-11, wherein said steps of fixing said second element (3) to said lower surface (2b), fixing said third element (6) to said upper surface (2a) and deforming said second element (2) to confer them the final shape of the container (1) are performed simultaneously in one operation.

13. Method according to one of claims 9-12, comprising a step of applying on said upper surface (2a) and/or on said lower surface (2b) of said first element (2) a first upper layer (9) and/or a first lower layer (10) of protective and/or anti-stick coating material.

14. Method according to one of claims 9-13, comprising a step of applying, on said upper surface (2a) and/or on said lower surface (2b) of said first element (2), respectively a second upper layer (11) and/or a second lower layer (12) of anticorrosion coating material, interposed between said first element (2) and said second element (3) and/or said third element (6), said step being carried out before said step of fixing said second element (3) to said lower surface (2b) and/or fixing said third element (6) to said upper surface (2a).

15. Method according to one of claims 9-14, wherein said second element (3) and/or said third element (6) is obtained by sheet cutting.

16. Method according to one of claims 9-15, wherein said second material and/or said third material is of the ferromagnetic type.

17. Method according to one of claims 9-16, wherein said second material and/or said third material consists of stainless steel.

18. Method according to one of claims 9-17, wherein said first material consists of aluminium or an aluminium alloy.

## Patentansprüche

1. Behälter zum Kochen von Nahrungsmitteln des Typs, der auf elektromagnetischen Induktionsquellen verwendet werden kann, umfassend ein erstes im Wesentlichen konkaves Element (2), das aus einem ersten Material hergestellt ist und umfassend eine obere Oberfläche (2a) die zur Aufnahme der kochenden Nahrungsmittel bestimmt ist, und eine untere Oberfläche (2b) zum Tragen des Behälters,
ein zweites Element (3), das an der besagten unteren Oberfläche (2b) befestigt und mindestens teilweise in der Dicke des besagten ersten Elements (2) enthalten ist,
wobei das besagte zweite Element (3) aus einem zweiten Material hergestellt ist, das geeignet ist, beim Eintauchen in das von einer Induktionsquelle erzeugte Magnetfeld erwärmt zu werden,
ferner das besagte zweite Element (3) eine Vielzahl von unteren Durchgangsöffnungen und/oder Kerben (4) aufweist, und
ein drittes Element (6), das an der besagten oberen Oberfläche (2a) befestigt und mindestens teilweise in der Dicke des besagten ersten Elements (2) enthalten ist,
wobei das besagte dritte Element (6) aus dem besagten zweiten Material oder einem dritten Material hergestellt ist,
wobei das besagte dritte Element (6) eine Vielzahl von oberen Durchgangsöffnungen und/oder Kerben (7) aufweist, wobei der besagte Behälter **dadurch gekennzeichnet ist, dass** das besagte zweite Element (3) und das besagte dritte Element (6) die jeweiligen unteren (4) und oberen (7) Öffnungen und/oder Kerben aufweisen, die jeweils gefaltete untere Kanten (4a) und obere Kanten (7a) definieren, die durch die Dicke des besagten ersten Elements (2) hindurchtreten, worin die besagten unteren (4a) und oberen (7a) Kanten jeweils konvergierende untere rohrförmige Abschnitte (4b) und obere rohrförmige Abschnitte (7b) definieren, die ausgelegt sind, um durch Hindurchtreten durch die Dicke des besagten ersten Elements (2) Unterschneidungen zu erhalten, die das Ablösen des besagten zweiten Elements (3) und dritten Elements (6) vom besagten ersten Element (2) verhindern.

2. Behälter nach Anspruch 1, worin das besagte erste Material dem nicht-ferromagnetischen Typ entspricht.

3. Behälter nach dem vorangegangenen Anspruch, worin das besagte erste Material aus Aluminium oder aus einer Aluminiumlegierung oder aus einem anderen Metallmaterial oder einer Metalllegierung besteht, **gekennzeichnet durch** hohe Wärmeleitfähigkeit und gute Bearbeitbarkeit.

4. Behälter nach Anspruch 1, worin das besagte zweite Material und/oder das besagte dritte Material vom ferromagnetischen Typ sind.

5. Behälter nach Anspruch 1, worin das besagte zweite Material und/oder das besagte dritte Material aus Edelstahl besteht.

6. Behälter nach Anspruch 1, worin die besagten oberen (7) und/oder unteren (4) Öffnungen im Wesentlichen kreisförmig sind und sie in einer im Wesentlichen gleichförmigen Weise auf der Oberfläche des besagten dritten Elements (6) und/oder zweiten Elements (3) verteilt sind.

7. Behälter nach irgendeinem der vorangegangenen Ansprüche, umfassend eine erste obere Schicht (9) und/oder eine erste untere Schicht (10) eines Schutz- und/oder Antihaftbeschichtungsmaterials, die jeweils auf die besagte obere Oberfläche (2a) des besagten ersten Elements (2) aufgebracht ist, das das besagte dritte Element (6) beinhaltet, und/oder auf die besagte untere Oberfläche (2b) des besagten ersten Elements (2), das das besagte zweite Element (3) beinhaltet.

8. Behälter nach dem vorangegangenen Anspruch, umfassend eine zweite obere Schicht (11) und/oder eine zweite untere Schicht (12) eines Antikorrosionsbeschichtungsmaterials, die zwischen dem besagten ersten Element (2) und dem besagten zweiten Element (3) und/oder dem besagten dritten Element (6) angeordnet ist.

9. Verfahren zum Erhalten eines Behälters zum Kochen von Nahrungsmitteln des Typs, der auf elektromagnetischen Induktionsquellen verwendet werden kann, umfassend die Schritte des:
Bereitstellens eines ersten Elements (2) aus einem ersten Material, umfassend eine obere Oberfläche (2a), die zur Aufnahme der kochenden Nahrungsmittel bestimmt ist, und eine untere Oberfläche (2b) zum Tragen des Behälters (1),
Bereitstellens eines zweiten Elements (3), das aus einem zweiten Material hergestellt ist, das geeignet ist, beim Eintauchen in das von einer Induktionsquelle erzeugte Magnetfeld erwärmt zu werden, und eine Vielzahl von unteren Durchgangsöffnungen und/oder Kerben (4) aufweist,
Bereitstellens eines dritten Elements (6), das aus dem besagten zweiten Material oder einem dritten Material hergestellt ist und eine Vielzahl von oberen Durchgangsöffnungen und/oder Kerben (7) aufweist, Befestigens des besagten zweiten Elements (3) an der besagten unteren Oberfläche (2b), um es mindestens teilweise in der Dicke des besagten ersten Elements (2) zu enthalten,
Befestigens des besagten drittes Elements (6) an der besagten oberen Oberfläche (2a), um es mindestens teilweise in der Dicke des besagten ersten Elements (2) zu enthalten, und
Verformens des besagten zweiten Elements (2), um ihm die endgültige Form des Behälters (1) zu verleihen, wobei das besagte Verfahren **dadurch gekennzeichnet ist, dass** die besagten unteren (4) und oberen (7) Öffnungen und oder Kerben jeweils untere (4a) und obere (7a) Kanten umfassen, die konvergierende rohrförmige Abschnitte definieren, die unter Einbeziehung der Dicke des besagten ersten Elements (2) ausgelegt sind, Unterschneidungen zu erhalten, die das Ablösen des besagten zweiten Elements (3) und dritten Elements (6) vom besagten ersten Element (2) verhindern und dadurch, dass die besagten Schritte des Befestigens des besagten zweiten Elements (3) an der besagten unteren Oberfläche (2b) und des Befestigens des besagten dritten Elements (6) an der besagten oberen Oberfläche (2a) durch eine erste und eine zweite Kaltformstufe erhalten werden, die mit unterschiedlichen Leistungen ausgeführt werden.

10. Verfahren nach dem vorangegangenen Anspruch, worin die besagte erste Kaltformstufe geeignet ist, das besagte zweite Element (3) an der besagten unteren Oberfläche (2b) und das besagte dritte Element (6) an der besagten oberen Oberfläche (2a) festzuhalten.

11. Verfahren nach dem vorangegangenen Anspruch, worin die besagte zweite Kaltformstufe geeignet ist, das besagte zweite Element (3) und das besagte dritte Element (6) in der Dicke des besagten ersten Elements (2) zu enthalten.

12. Verfahren nach einem der Ansprüche 9-11, worin die besagten Schritte des Befestigens des besagten zweiten Elements (3) an der besagten unteren Oberfläche (2b), des Befestigens des besagten dritten Elements (6) an der besagten oberen Oberfläche (2a) und des Verformens des besagten zweiten Elements (2), um ihnen die endgültige Form des Behälters (1) zu verleihen, gleichzeitig in einem Vorgang ausgeführt werden.

13. Verfahren nach einem der Ansprüche 9-12, umfassend einen Schritt des Aufbringens auf die besagte obere Oberfläche (2a) und/oder auf die besagte untere Oberfläche (2b) des besagten ersten Elements (2) einer ersten oberen Schicht (9) und/oder einer ersten unteren Schicht (10) eines Schutz- und/oder Antihaftbeschichtungsmaterials.

14. Verfahren nach einem der Ansprüche 9-13, umfassend einen Schritt des Aufbringens auf die besagte obere Oberfläche (2a) und/oder auf die besagte untere Oberfläche (2b) des besagten ersten Elements (2) jeweils einer zweiten oberen Schicht (11) und/oder einer zweiten unteren Schicht (12) eines Antikorrosionsbeschichtungsmaterials, die zwischen dem besagten ersten Element (2) und dem besagten zweiten Element (3) und/oder dem besagten dritten Element (6) angeordnet ist, wobei der besagte Schritt vor dem besagten Schritt des Befestigens des besagten zweiten Elements (3) an der besagten unteren Oberfläche (2b) und/oder des Befestigens des besagten dritten Elements (6) an der besagten oberen Oberfläche (2a) ausgeführt wird.

15. Verfahren nach einem der Ansprüche 9-14, worin das besagte zweite Element (3) und/oder das besagte dritte Element (6) durch Schneiden von Blechen erhalten wird.

16. Verfahren nach einem der Ansprüche 9-15, worin das besagte zweite Material und/oder das besagte dritte Material vom ferromagnetischen Typ ist.

17. Verfahren nach Anspruch 9-16, worin das besagte zweite Material und/oder das besagte dritte Material aus Edelstahl besteht.

18. Verfahren nach einem der Ansprüche 9-17, worin das besagte erste Material aus Aluminium oder einer Aluminiumlegierung besteht.

## Revendications

1. Récipient destiné à cuire des aliments, du type qui peut être utilisé sur des sources d'induction électromagnétique, comprenant un premier élément sensiblement concave (2), constitué d'un premier matériau et comprenant une surface supérieure (2a) destinée à recevoir les aliments qui doivent être cuits, et une surface inférieure (2b) pour le support du récipient,
un deuxième élément (3) fixé à ladite surface inférieure (2b) et au moins partiellement inclus dans l'épaisseur dudit premier élément (2),
ledit deuxième élément (3) étant constitué d'un deuxième matériau adapté pour être chauffé quand il est immergé dans le champ magnétique généré par une source d'induction,
ledit deuxième élément (3) étant également affecté par une pluralité d'ouvertures et/ou d'encoches (4) inférieures traversantes, et
un troisième élément (6) fixé à ladite surface supérieure (2a) et au moins partiellement inclus dans l'épaisseur dudit premier élément (2),
ledit troisième élément (6) étant constitué dudit deuxième matériau ou d'un troisième matériau,
ledit troisième élément (6) comprenant une pluralité d'ouvertures et/ou d'encoches (7) supérieures traversantes, ledit récipient étant **caractérisé en ce que** ledit deuxième élément (3) et ledit troisième élément (6) ont leurs ouvertures et/ou encoches inférieures (4) et supérieures (7) respectives qui définissent des bords inférieurs (4a) et des bords supérieurs (7a) repliés respectifs qui pénètrent à travers l'épaisseur dudit premier élément (2), dans lequel lesdits bords inférieurs (4a) et supérieurs (7a) définissent des parties tubulaires inférieures (4b) et des parties tubulaires supérieures (7b) convergentes respectives adaptées pour obtenir, pénétrant à travers l'épaisseur dudit premier élément (2), des contre-dépouilles qui empêchent le détachement dudit deuxième élément (3) et dudit troisième élément (6) dudit premier élément (2).

2. Récipient selon la revendication 1, dans lequel ledit premier matériau est du type non-ferromagnétique.

3. Récipient selon la revendication précédente, dans lequel ledit premier matériau est composé d'aluminium, ou d'un alliage d'aluminium, ou d'un autre matériau métallique, ou alliage métallique, **caractérisé par** une conductivité thermique élevée et une bonne usinabilité.

4. Récipient selon la revendication 1, dans lequel ledit deuxième matériau et/ou ledit troisième matériau sont du type ferromagnétique.

5. Récipient selon la revendication 1, dans lequel ledit deuxième matériau et/ou ledit troisième matériau sont constitués d'acier inoxydable.

6. Récipient selon la revendication 1, dans lequel lesdites ouvertures supérieures (7) et/ou inférieures (4) sont sensiblement circulaires et sont réparties de manière sensiblement uniforme sur la surface dudit troisième élément (6) et/ou dudit deuxième élément (3).

7. Récipient selon l'une des revendications précédentes, comprenant une première couche supérieure (9) et/ou une première couche inférieure (10) de matériau de revêtement de protection et/ou antiadhésif, respectivement appliquées sur ladite surface supérieure (2a) dudit premier élément (2) incorporant ledit troisième élément (6), et/ou sur ladite surface inférieure (2b) dudit premier élément (2) incorporant ledit deuxième élément (3).

8. Récipient selon la revendication précédente, comprenant une deuxième couche supérieure (11) et/ou une deuxième couche inférieure (12) constituée de matériau de revêtement anticorrosion, intercalée entre ledit premier élément (2) et ledit deuxième élément (3) et/ou ledit troisième élément (6).

9. Procédé pour obtenir un récipient pour cuire des aliments, du type qui peut être utilisé sur des sources d'induction électromagnétique, comprenant les étapes de :
fournir un premier élément (2) constitué d'un premier matériau, comprenant une surface supérieure (2a) destinée à recevoir les aliments qui doivent être cuits, et une surface inférieure (2b) pour le support du récipient (1),
fournir un deuxième élément (3), constitué d'un deuxième matériau adapté pour être chauffé quand il est immergé dans le champ magnétique généré par une source d'induction, et affecté par une pluralité d'ouvertures et/ou d'encoches (4) inférieures traversantes,
fournir un troisième élément (6) constitué dudit deuxième matériau ou d'un troisième matériau et comprenant une pluralité d'ouvertures et/ou d'encoches (7) supérieures traversantes,
fixer ledit deuxième élément (3) sur ladite surface inférieure (2b), de façon à l'inclure au moins partiellement dans l'épaisseur dudit premier élément (2),
fixer ledit troisième élément (6) sur ladite surface supérieure (2a), de façon à l'inclure au moins partiellement dans l'épaisseur dudit premier élément (2), et
déformer ledit deuxième élément (2) pour lui donner la forme finale du récipient (1), ledit procédé étant **caractérisé en ce que** lesdites ouvertures et/ou encoches inférieures (4) et supérieures (7) comprennent des bords inférieurs (4a) et supérieurs (7a) respectifs qui définissent des parties tubulaires convergentes, adaptées pour obtenir, avec l'inclusion dans l'épaisseur dudit premier élément (2), des contre-dépouilles qui empêchent le détachement dudit deuxième élément (3) et dudit troisième élément (6) dudit premier élément (2) et **en ce que** lesdites étapes de fixation dudit deuxième élément (3) sur ladite surface inférieure (2b), et de fixation dudit troisième élément (6) sur ladite surface supérieure (2a) sont obtenues par l'intermédiaire d'un premier et d'un deuxième stades de moulage à froid, réalisés à différentes puissances.

10. Procédé selon la revendication précédente, dans lequel ledit premier stade de moulage à froid est adapté pour maintenir ledit deuxième élément (3) sur ladite surface inférieure (2b), et ledit troisième élément (6) sur ladite surface supérieure (2a).

11. Procédé selon la revendication précédente, dans lequel ledit deuxième stade de moulage à froid est adapté pour inclure ledit deuxième élément (3) et ledit troisième élément (6) dans l'épaisseur dudit premier élément (2).

12. Procédé selon l'une des revendications 9 à 11, dans lequel lesdites étapes de fixation dudit deuxième élément (3) à ladite surface inférieure (2b), de fixation dudit troisième élément (6) à ladite surface supérieure (2a) et de déformation dudit deuxième élément (2) pour leur donner la forme finale du récipient (1) sont réalisées simultanément en une opération.

13. Procédé selon l'une des revendications 9 à 12, comprenant une étape d'application sur ladite surface supérieure (2a) et/ou sur ladite surface inférieure (2b) dudit premier élément (2) une première couche supérieure (9) et/ou une première couche inférieure (10) de matériau de revêtement de protection et/ou antiadhésif.

14. Procédé selon l'une des revendications 9 à 13, comprenant une étape d'application, sur ladite surface supérieure (2a) et/ou sur ladite surface inférieure (2b) dudit premier élément (2), respectivement, d'une deuxième couche supérieure (11) et/ou d'une deuxième couche inférieure (12) de matériau de revêtement anticorrosion, intercalée entre ledit premier élément (2) et ledit deuxième élément (3) et/ou ledit troisième élément (6), ladite étape étant réalisée avant ladite étape de fixation dudit deuxième élément (3) sur ladite surface inférieure (2b) et/ou de fixation dudit troisième élément (6) sur ladite surface supérieure (2a) .

15. Procédé selon l'une des revendications 9 à 14, dans lequel ledit deuxième élément (3) et/ou ledit troisième élément (6) est obtenu en découpant une tôle.

16. Procédé selon l'une des revendications 9 à 15, dans lequel ledit deuxième matériau et/ou ledit troisième matériau est du type ferromagnétique.

17. Procédé selon l'une des revendications 9 à 16, dans lequel ledit deuxième matériau et/ou ledit troisième matériau sont constitués d'acier inoxydable.

18. Procédé selon l'une des revendications 9 à 17, dans lequel ledit premier matériau est constitué d'aluminium ou d'alliage d'aluminium.
